Europäisches Patentamt

European Patent Office

Office européen des brevets

(11) Veröffentlichungsnummer: **0 209 605**
A1

# (12) EUROPÄISCHE PATENTANMELDUNG
Veröffentlicht nach Art. 158 Abs. 3 EPÜ

(21) Anmeldenummer: 86901170.0

(22) Anmeldetag: 15.01.86

Daten der zugrundeliegenden internationalen Anmeldung:

(86) Internationale Anmeldenummer:
PCT/SU86/00001

(87) Internationale Veröffentlichungsnummer:
WO86/04287 (31.07.86 86/17)

(51) Int. Cl.⁴: **B 23 Q 3/15**
B 23 Q 3/152, B 23 Q 3/154

(30) Priorität: 15.01.85 SU 3842035

(43) Veröffentlichungstag der Anmeldung:
28.01.87 Patentblatt 87/5

(84) Benannte Vertragsstaaten:
DE FR GB IT NL

(71) Anmelder: LENINGRADSKY GOSUDARSTVENNY
PEDAGOGICHESKY INSTITUT IMENI A.I. GERTSENA
nab. reki Moiki
48 Leningrad, 191186(SU)

(72) Erfinder: CHERNIKOV, Yury Lvovich
pr. Energetikov, 28/6-70
Leningrad, 195248(SU)

(72) Erfinder: PATYKIVSKY, Bogdan Iosifovich
ul. Sovetskaya, 70-79
Drogobych, 293720(SU)

(72) Erfinder: CHERNOVOL, Vladimir Alexandrovich
ul. Severnaya, 12-2
Vyborg, 188900(SU)

(74) Vertreter: Patentanwälte Beetz sen. - Beetz jun. Timpe -
Siegfried - Schmitt-Fumian
Steinsdorfstrasse 10
D-8000 München 22(DE)

(54) ANORDNUNG ZUM MAGNETISCHEN BEFESTIGEN VON TEILEN.

(57) The device comprises a plate (1) for positioning a part (11) during its processing on a machine-tool and a magnetic field generating unit comprised of at least one core (3) mounted on a base (2). The lower part (4) of each core (3) is embraced by direct current winding coil (6) and is thickened so as to form, together with the upper part (5), a supporting step for the plate (1), the upper part (5) being placed inside the body of the plate (1) and being magnetically insulated from it by means of elements (7) made of a non-magnetic material. The contact surface between the plate (1) and the core (3) does not exceed the cross-section area of the plate (1), limited by the perimeter of the step of the core (3), whereas the distance (T) between the axes of the cores (3) is defined by formula (1) where B – magnetic induction corresponding to the state of magnetic saturation of the material of the plate (1); h – thickness of the plate (1); $P_o$ – specific force of attraction of the part (11); b – thickness of the lower parts (4) of the cores (3).

FIG.1

# VORRICHTUNG ZUR MAGNETISCHEN BEFESTIGUNG VON WERKSTÜCKEN

## Gebiet der Technik

Die vorliegende Erfindung bezieht sich auf die technologische Ausrüstung für Metallbearbeitungsmaschinen und betrifft insbesondere Vorrichtungen zur magnetischen Befestigung von Werkstücken.

## Bisheriger Stand der Technik

Es sind Vorrichtungen zur magnetischen Befestigung von Werkstücken (s.Walker-Hagou.-BV-Reklameschrift, EFE 05/83 Alterationsreserved, oder A.J.Vernikov "Magnetische und elektromagnetische Vorrichtungen in der Metallverarbeitung", Moskau,Verlag "Mashinostroenie",1984,S.56,Tafel 9,Ziff.1,3) bekannt, die eine Platte zur Aufnahme von Werkstücken und eine Einheit zur Magnetfelderregung enthalten, die auf einer Grundlage angeordnete Kerne aus weichmagnetischem Werkstoff aufweist, die durch Spulen mit Gleichstromwicklung umschlossen sind und die Hauptpole eines Magnetsystems bilden. Die Platte zur Aufnahme von Werkstücken stellt eine zusammengesetzte Konstruktion aus über den Hauptpolen des Magnetsystems liegenden Stahlblöcken und aus zwischen diesen angeordneten und miteinander abwechselnden Stahlplatten und Platten aus unmagnetischem Werkstoff dar.

Derartige Konstruktion der Vorrichtung gestattet es, neben den Groß- auch verhaltnismäßig kleine Werkstücke zu befestigen, was deren großer Vorteil ist, der eine technologische Universälitat der Vorrichtung sichert.

Die zusammengesetzte Platte ist aber kompliziert in der Herstellung. Außerdem wird die Platte bei Betrieb mechanischen und thermischen Einwirkungen unterzogen, die unterschiedliche Verformungen bei den verschiedenen die Platte bildenden Elementen hervorrufen. Dies führt zu einem Verlust der Formgenauigkeit und zur Bildung von Mikrorissen, was die Genauigkeit der Werkstückbestimmung und -bearbeitung sowie die Zuverlässigkeit der Vorrichtung wegen eines eventuellen Undichtwerdens der Platte herabsetzt.

Es ist Vorrichtung zur magnetischen Befestigung von Werkstücken (s.Walker-Hagou.-BV-Reklameschrift für ein

-2-

Symposium zu den Problemen der magnetischen Ausrüstung, Odessa,1983,S.10,11, Bild 10, oder A.J.Vernikov "Magnetische und elektromagnetische Vorrichtungen in der Metallverarbeitung", Moskau,Verlag "Mashinostroenie",1984,S.50, Tafel 7,Ziff.1) bekannt, die eine Platte zur Aufnahme von Werkstücken und eine Einheit zur Magnetfelderregung enthält, die auf einer Grundlage angeordnete Kerne aufweist, deren untere Teile mit Spulenwicklungen umfaßt sind, während deren obere Teile oder deren Fortsetzungen im Körper der Platte untergebracht und von dieser durch unmagnetische Elemente magnetisch isoliert sind. Die Platte ist dabei ganzmetallisch mit Ausnahme von Abschnitten ausgeführt, auf denen die oberen Teile der Kerne der Einheit zur Erregung untergebracht sind.

Die Unterbringung der oberen Teile der Kerne im Körper der Platte zur Aufnahme von Werkstücken ermöglicht den Austritt des Magnetflusses auf die zu befestigenden Werkstücke auf dem kürzesten Weg und also auch die Erzeugung größerer Kräfte zur Anziehung der Werkstücke.

Dies trifft aber nur für relativ große Werkstücke zu, die mindestens zwei Pole des Magnetsystems überdecken. Die kleinen Werkstücke werden an derartiger Vorrichtung unsicher befestigt, während die Werkstücke, deren Größe wesentlich kleiner als der Polabstand ist, grundsätzlich nicht befestigt werden können. Um dies zu ermöglichen, ist es notwendig, den Polabstand zu verringern, was zur Vergrößerung der Anzahl der Kerne und Spulen führt, die Konstruktion plötzlich stark kompliziert und die Zuverlässigkeit der Vorrichtung herabsetzt. Gleichzeitig nimmt wegen eines dichten Netzes der unmagnetischen Elemente die Inhomogenität der Platte zu, was die Genauigkeit der Werkstückbestimmung und -bearbeitung reduziert. In derartiger Vorrichtung sind auch ein Undichtwerden der Platte an den Montageorten der unmagnetischen Elemente und ein Durchdringen der Kühlflüssigkeit an die Spulenwicklungen möglich.

Offenbarung der Erfindung

Der Erfindung liegt die Aufgabe zugrunde, eine derartige Vorrichtung zur magnetischen Befestigung von Werkstücken zu schaffen, in der die konstruktive Ausführung der Einheit zur Magnetfelderzeugung es gestattet, Werkstücke mit einem weiten Größenbereich zu befestigen, eine hohe Genauigkeit bei deren Bestimmung und Bearbeitung, deren hohe Einsatzzuverlässigkeit zu gewährleisten, und die sich durch eine verhältnismäßig einfache Bauweise und Herstellungstechnologie auszeichnet.

Die gestellte Aufgabe wird dadurch gelöst, daß in der Vorrichtung zur magnetischen Befestigung von Werkstücken, die eine Platte zur Aufnahme von Werkstücken und eine Einheit zur Magnetfelderregung in Form von mindestens einem auf einer Grundlage angeordneten Kern enthält, dessen unterer Teil durch eine Spule mit Gleichstromwicklung umschlossen und dessen oberer Teil im Körper der Platte untergebracht und von dieser mittels unmagnetischer Elemente magnetisch isoliert ist, gemäß der Erfindung der untere Teil des Kernes verdickt ausgeführt, ist, wobei er mit dem oberen Teil eine Stufe bildet, auf der die Platte aufliegt, während die Kontaktfläche der Platte mit dem Kern die Querschnittsfläche der Platte nicht überschreitet, die durch den Umfang der Stufe des Kernes begrenzt ist, und der Achsabstand der Kerne durch die Beziehung festgelegt ist:

$$\mathcal{T} = \frac{1,6 \cdot 10^3 \cdot B \cdot h}{\sqrt{P_O}} + b \quad , \tag{1}$$

Es bedeuten: $\mathcal{T}$ - Achsabstand der Kerne;

B - magnetische Sättigungsinduktion des Werkstoffes der Platte;

h - Plattendicke;

b - Dicke der unteren Teile der Kerne;

$P_O$ - spezifische Kraft der Anziehung der Werkstücke.

Eine über die Platte gleichmäßig verteilte Kraft der Anziehung der Werkstücke kann im Bereich des oberen Teiles des Kernes erreicht werden, wenn dieser trapezförmig ist.

Die erfindungsgemäß ausgeführte Vorrichtung zur magnetischen Befestigung von Werkstücken ist bei einer relativ einfachen konstruktiven Ausführung betriebssicher, gestattet es, die Werkstücke in einem weiten Größenbereich mit der erforderlichen Kraft zu befestigen, gewährliestet deren hohe Bearbeitungsgenauigkeit.

## Kurze Beschreibung der Zeichnungen

Die vorgeschlagene Erfindung wird nachstehend anhand konkreter Ausführungsbeispiele und beigelegter Zeichnungen näher erläutert. Es zeigt:

Fig.1 eine erfindungsgemäße Vorrichtung zur magnetischen Befestigung von Werkstücken in axonometrischer Darstellung im Längsschnitt;

Fig.2 eine andere Ausführungsform der erfindungsgemäßen Baugruppe Platte-Kern;

Fig.3 eine Ausführungsform der erfindungsgemäßen Baugruppe Platte-Kern;

Fig.4 eine weitere Ausführungsform der erfindungsgemäßen Baugruppe Platte-Kern;

Fig.5 eine Ausführungsform einer Konstruktion der erfindungsgemäßen Vorrichtung mit einem Kern;

Fig.6 eine Kontaktanordnung des erfindungsgemäßen Kernes mit der Platte;

Fig.7 Kurven, die magnetische Eigenschaften des Werkstoffes der erfindungsgemäßen Platte charakterisieren;

Fig.8 einen Abschnitt der erfindungsgemäßen Platte mit einem darauf befestigten Werkstück;

Fig.9 dto.wie in Fig.8 in axonometrischer Darstellung gemäß der Erfindung;

Fig.10 eine erfindungsgemäße Baugruppe Kern-Platte-Grundlage.

## Bevorzugte Ausführungsform der Erfindung

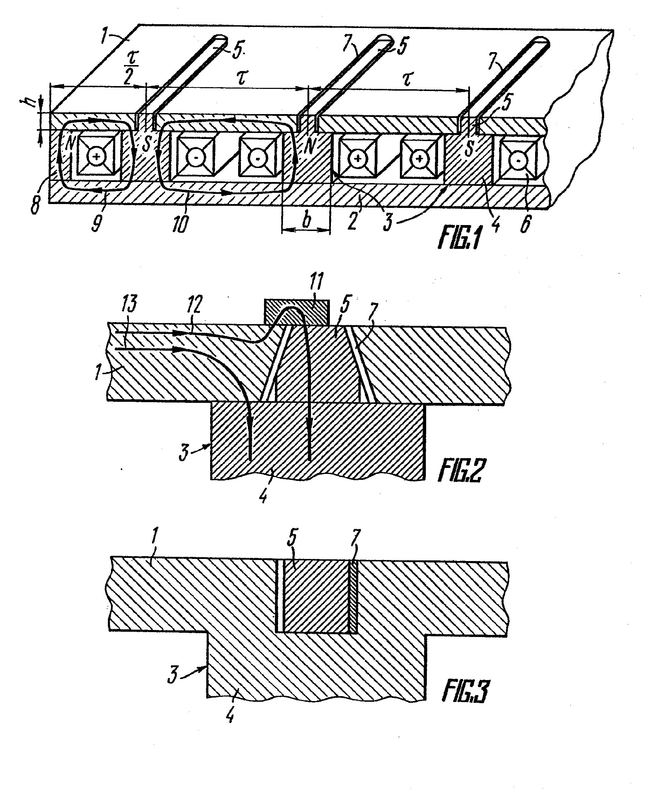

Die Vorrichtung zur magnetischen Befestigung von Werkstücken enthält bei der Bearbeitung auf der Werkzeugmaschine eine Platte 1 (Fig.1) zur Aufnahme von Werkstücken und eine Einheit zur Magnetfelderregung, die in Form von auf einer Grundlage 2 angeordneten Kernen 3 hergestellt ist. Der untere Teil 4 jedes Kernes 3 ist verdickt ausgeführt, wobei er mit dem oberen Teil 5 eine Stufe 5 bildet, die mit der Platte 1 kontaktiert und durch eine Spule 6 mit Gleichstromwicklung umschlossen ist. Die oberen Teile 5 sind im Körper der Platte 1 untergebracht und von dieser durch unmagnetische Elemente 7 getrennt. Platte 1, Grundlage 2, Kerne 3 sowie Außenwände 8, die das Gehäuse der Vorrichtung bilden und den magnetischen Kreis schließen, sind aus einem weichmagnetischen Werkstoff hergestellt. In Abhängigkeit von der Größe der Vorrichtung kann die Anzahl der Kerne 3 verschieden sein.

Die Linien 9 und 10 mit Pfeilen deuten die Verläufe der magnetischen Flüsse bei Fehlen von Werkstücken auf der Platte 1 an. Die Spulen 6 sind miteinander in der Weise gekoppelt, daß die Polaritäten N und S der Kerne 3 miteinander abwechseln. In Fig.1 sind folgende Bezeichnungen eingeführt:

h - Plattendicke;

$\mathcal{T}$ - Achsabstand der Kerne 3, im folgenden Polabstand genannt;

b - Dicke des unteren Teiles 4 des Kernes 3.

Zur Sicherung einer gleichmäßigen Verteilung der Haltekraft über das Werkstück 11 (Fig.2) auf der Platte 1 im Bereich der oberen Teile 5 der Kerne 3 ist es zweckmäßig, die oberen Teile 5 trapezförmig auszuführen. Durch die Linien 12,13 mit den Pfeilen sind mögliche Verläufe des magnetischen Flusses bei Vorhandensein des Werkstücks 11 angedeutet, das das unmagnetische Element 7 überdeckt.

Die unteren Teile 4 (Fig.2,3,4) der Kerne 3 können als Ganzes mit der Platte 1 bei verschiedenen Formen der oberen Teile 5 der Kerne 3 ausgeführt werden.

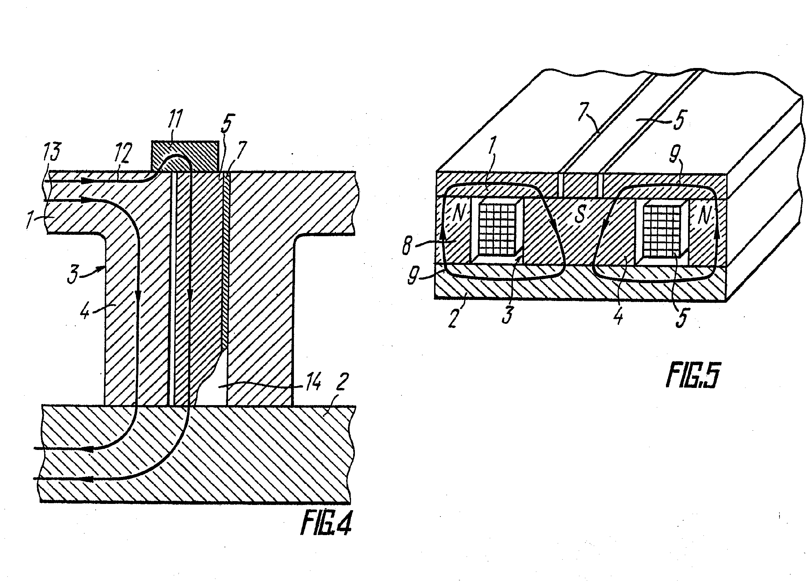

In Fig.4 ist eine Ausführungsform der Vorrichtung aufgeführt, bei der im unteren Teil 4 der Kerne 3 eine durchgehende axiale Längsnut 14 ausgeführt ist, in der ein Einsatz untergebracht ist, der als Ganzes mit dem oberen Teil 5 des Kernes 3 hergestellt ist und mit der Grundlage 2 kontaktiert wird.

In Fig.5 ist eine Ausführungsform der Vorrichtung mit einem Kern 3 dargestellt.

Für eine beliebige Ausführungsform der Konstruktion der Vorrichtung muß eine Bedingung eingehalten werden, die darin besteht, daß die Kontaktfläche des unteren Teiles 4 jedes Kernes 3 mit der Platte 1 die Querschnittsfläche der Platte 1 nicht überschreitet, die durch den Umfang der Stufe des Kernes 3 begrenzt ist. Die Bedingung dieser Beziehung wird in Fig.6 erläutert, wo die schraffierten Abschnitte der Kontaktfläche des unteren Teiles 4 des Kernes 3 mit der Platte 1 und der nichtschraffierte Abschnitt zwischen ihnen einer Spur des zur Vereinfachung des Bildes in Fig.6 nicht angedeuteten oberen Teiles 5 des Kernes 3 entsprechen. Das Wesen der angenommenen Bedingung besteht darin, daß der Flächeninhalt der schraffierten Abschnitte den gesamten Flacheninhalt von Rechtecken 15,16,17,18 nicht übertrifft, über die der Magnetfluß aus der Platte 1 in den unteren Teil 4 des Kernes 3 übergeht. Offensichtlich ist, daß die Höhe der genannten Rechtecke 15,16,17,18 gleich der Dicke h der Platte 1 und deren Gesamtlänge gleich dem Umfang der Stufe des Kernes 3 ist.

Der physikalische Sinn der genannten Bedingung erfordert die Betrachtung der Arbeitsweise der Vorrichtung, worauf nachfolgend eingegangen wird.

In der erfindungsgemäßen Vorrichtung muß auch eine Bedingung eingehalten werden, die darauf hinausläuft, daß der Achsabstand $\mathcal{T}$ (Fig.1) der Kerne 3, d.h. der Polabstand, durch die Beziehung festgelegt ist:

$$\mathcal{T} = \frac{1,6 \cdot 10^3 \cdot B \cdot h}{\sqrt{P_o}} + b \quad ,$$

Es bedeuten:

B - magnetische Induktion, die einer magnetischen Sättigung des Werkstoffes der Platte 1 entspricht;

h - Dicke der Platte 1;

$P_o$ - spezifische Kraft der Anziehung der Werkstücke 11;

b - Dicke des unteren Teiles des Kernes 3.

Derartige Größe $\mathcal{T}$ des Polabstandes ist optimal für die Vorrichtung vom Standpunkt der Einfachheit der Konstruktion, der Sicherung der Gleichmäßigkeit der Kraft der Anziehung der Werkstücke 11 an die Platte 1 und der Universalität der Vorrichtung, was nachstehend bei der Beschreibung der Arbeitsweise der Vorrichtung begründet ist.

In der Konstruktion der Vorrichtung mit einem Kern 3 nach Fig. 5 wird die Rolle des zweiten Pols des magnetischen Kreises durch die Wände des Gehäuses 8 übernommen, weshalb der Achsabstand der Pole N und S gleich $\tau/2$ ist und der gesamte Polabstand $\tau$ durch die Breite der Vorrichtung festgelegt wird. Übersteigt die Breite der Vorrichtung den nach der oben angeführten Beziehung ermittelten Polabstand $\tau$ , weist das auf die Notwendigkeit der Einführung eines zweiten Kernes 3 hin.

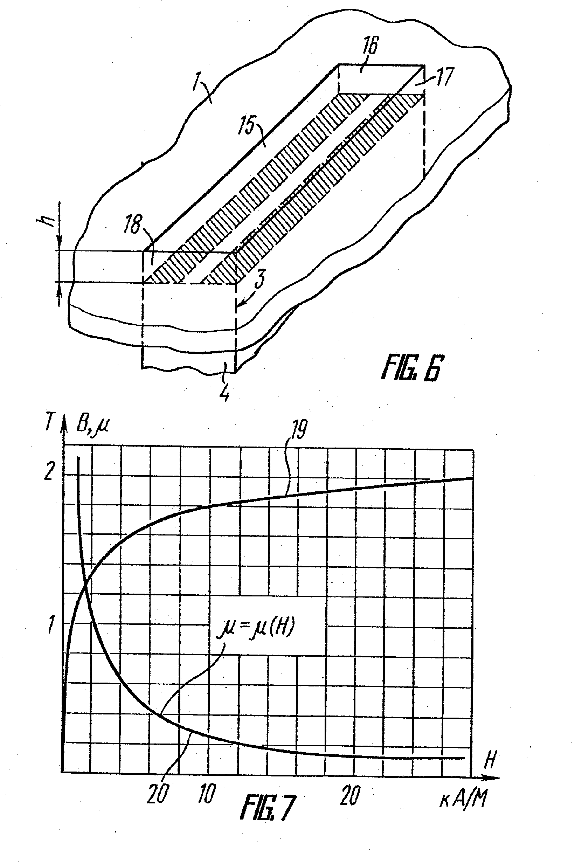

Fig. 7 zeigt eine Kurve 19 der Abhängigkeit der magnetischen Induktion B von der magnetischen Feldstärke H im Werkstoff 1 der Platte 1 - im Stahl, während die Kurve 20 eine Abhängigkeit der magnetischen Permeabilität $\mu$ von der magnetischen Feldstärke H wiedergibt.

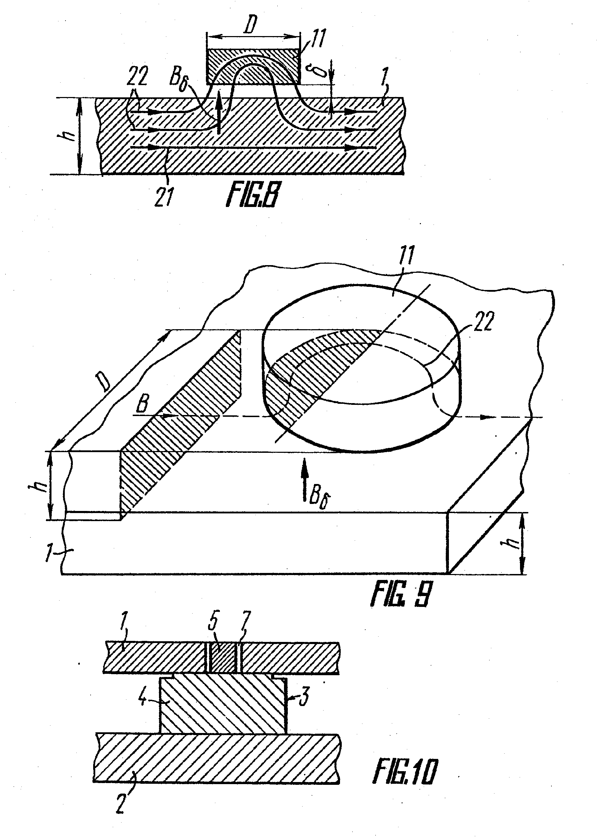

Bei der Befestigung eines Werkstücks 11 mit einem Durchmesser von D (Fig.8) auf einem durchgehenden Abschnitt der Platte 1 wird durch die Linie 21 ein Teil des Magnetflusses, der die Platte 1 durchsetzt, und durch die Linien 22 ein sich in das Werkstück 11 über einen Luftspalt $\delta$ bei einer magnetischen Induktion $B_\delta$ abzweigender Teil des Magnetflusses angedeutet.

Die magnetische Induktion B (Fig.9) entspricht einer magnetischen Sättigungsinduktion des Werkstoffes, aus dem die Platte 1 hergestellt ist.

Die Dicke der unteren Teile 4 der Kerne 3 kann, falls erforderlich, unter Konstanthaltung der Auflagefläche vergrößert werden, wie dies in Fig. 10 gezeigt ist.

Die Arbeit der Vorrichtung beruht auf der Ausnutzung der Erscheinung der magnetischen Sättigung des weichmagnetischen Werktoffes der Platte 1 (Fig.1), die bei einer bestimmten Stärke des im magnetischen Kreis der Vorrichtung beim Durchfluß eines Gleichstroms durch die Spulenwicklungen 6, d.h. beim Anschluß der Wicklung an eine Gleichspannungsquelle, erregten Magnetfeldes eintritt. Bei der Anordnung der Spulen 6 in einer unterschiedliche Polaritäten der benachbarten Kerne 3 in der Vorrichtung sichernden Schaltung, wie dies z.B. durch Kreuze und Punkte angedeutet ist, die     auf die Spulen 6 in Fig.1 aufgetragen sind und die Stromrichtung in den Spulen 6 bedeuten, entstehen im magnetischen Kreis der Vorrichtung in Grenzen jedes Polabstandes Magnetflüsse, die sich über die Kerne 3, die Platte 1 und die Grundlage 2 schließen. Die Linien 9, 10 veranschaulichen die Verläufe dieser Flüsse bei Fehlen der Werkstücke 11 auf der Platte 1 (Fig.1,5). Ist der magnetische Widerstand der Kerne 3 und der Grundlage 2 klein gegenüber dem magnetischen Widerstand der Platte 1, ist der Großteil der magnetomotorischen Kraft jeder Spule 6 an einen Abschnitt der Platte 1 mit einer Länge angelegt, die gleich dem Polabstand $\tau$ ist, wodurch in dieser eine relativ große magnetische Feldstärke gesichert wird. Offensichtlich ist dabei die Zweckmäßigkeit dessen, daß bei der Durchleitung des Magnetflusses über unwirksame Abschnitte des magnetischen Kreises - Kerne 3 und Grundlage 1 - ein möglichst geringer Teil der magnetomotorischen Kraft F der Spulen 6 verbraucht wird. Dies ist durch eine Vergrößerung der Dicken der Kerne 3 und der Grundlage 1 gegenüber der Dicke h der Platte 1 leicht zu erreichen. Durchaus erreichbar ist ein derartiger Zustand des magnetischen Kreises der Vorrichtung, bei dem beinahe die gesamte magnetomotorische Kraft der Spulen 6 an die jeweiligen Abschnitte der Platte 1 angelegt ist. Dann läßt sich die magnetische Feldstärke H für einen dem Polabstand $\tau$ (Fig.1) entsptechenden Abschnitt durch die magnetomotorische Kraft F für jede Spule 6:

$$H = F/\tau \qquad (2)$$

ermitteln:

Bei einem bestimmten Betrag der magnetischen Feldstärke H in der Platte 1 tritt deren magnetische Sättigung ein, die sich durch eine sprunghafte Verlangsamung der Zunahme des Magnetflusses und also auch der magnetischen Induktion B (Fig.7) auszeichnet. Dieser bekannte Vorgang wird durch die in Fig.7 aufgeführte Magnetisierungskurve 19 für den Konstruktionsstahl beschrieben. Dort ist auch eine Kurve

$\mu = \mu(H)$ aufgetragen, worin $\mu$ - die magnetische Permeabilität von Stahl ist, die mit steigender Feldstärke H steil abfällt. Ein Kehrwert der magnetischen Permeabilität ist der magnetische Widerstand der Platte 1, der bei der Sättigung plötzlich stark zunimmt. Die Zunahme des magnetischen Widerstandes der Platte 1 in Flußrichtung nach der Linie 21 ist eine unmittelbare Ursache einer Abzweigung des Magnetflusses nach den Linien 22 in das auf der Platte 1 angeordnete Werkstück 11 (Fig.8) und der Befestigung dieses Werkstücks 11. Die Anziegungskraft wird hierbei durch den Wert $B_\delta$ der mittleren Induktion eines sich über den Luftspalt $\delta$ zwischen der Platte 1 und dem Werkstück 11 nach den Linien 22 abzweigenden Teiles des Magnetflusses bestimmt.

Der Spalt $\delta$ hängt von der Güte der Auflageflächen der Platte 1 und des Werkstücks 11 ab und bewegt sich meist in Grenzen von 0,01 bis 0,1 mm. Aus Fig.8 ist ersichtlich, daß die Abzweigung des Flusses in das Werkstück 11 nach den Linien 22 nur in dem Fall erfolgt, wenn der magnetische Widerstand des Eisenweges über die zwei Spalte $\delta$ und das Werkstück 11 kleiner als der magnetische Widerstand der Platte 1 auf dem dem Durchmesser D des Werkstücks 11 entsprechenden Abschnitt ist. Aus der in Fig.7 dargestellten Kurve 20 folgt, daß die magnetische Permeabilität des Werkstoffes der Platte 1 (Fig.1) bei einer ausreichend großen magnetischen Feldstärke H in der Platte 1 um ein Vielfaches von 10 abfällt. Dementsprechend nimmt der magnetische Widerstand der Platte 1 zu, was es ermöglicht, einen derartigen Grad der magnetischen Sättigung der Platte 1 zu wählen , bei der die Werkstücke 11 mit der erforderlichen Anziehungskraft befestigt werden.

Eine wichtige Eigenschaft der Vorrichtung mit der magnetisch gesättigten Platte 1 zur Aufnahme der Werkstücke 11 ist die Fähigkeit der Platte 1, Werkstücke 11 beliebiger Größe zu befestigen. Das Werkstück 11 formiert selbst abhängig vom Durchmesser D eine neue Polteilung, wobei der Polabstand gleich dem Durchmesser D (Fig.8) des Werkstücks 11 ist und um ein Mehrfaches kleiner als der Pol-abstand $\tau$ zwischen den Achen der Kerne 3 sein kann. Die Platte 1 weist gleichsam eine sich an die Größe des Werkstücks 11 selbst anpassende Polteilung auf. Hierbei charakterisiert der durch den Achsabstand der Kerne 3 (Fig.1) definierte Polabstand $\tau$ die Fähigkeit der Vorrichtung, größe Werkstücke 11 zu befestigen, die mindestens zwei Kerne 3 überdecken, während die durch die kleinen Werkstücke 11 formierten Polteilungen die Fähigkeit der Vorrichtung kennzeichnen, die kleinen Werkstücke 11 auf den Abschnitten der Platte 1 zwischen den Kernen 3 zu befestigen. Deshalb kann man sagen, daß bei der erfindungsgemäßen Vorrichtung zwei Prinzipien der Befestigung der Werkstücke 11 ausgenutzt werden. Das für den Großteil der Spannfläche der Platte 1 geltende Hauptprinzip ist dasjenige, das auf der Auswertung der Eigenschaft der ferromagnetischen Werkstoffe beruht, ihren magnetischen Widerstand bei einer Sättigung sprunghaft zu vergrößern. Das zweite Prinzip besteht in einer traditionsgemäßen Unterteilung der Vorrichtung in Polabschnitte, die durch den Abstand zwischen den Polen N und S definiert wird.

Die Wahl des Polabstandes $\tau$ gemäß Ausdruck (1) sorgt für einen kontinuierlichen Übergang von einem Verfahren zur Befestigung der Werkstücke 11 zum anderen bei der Umschaltung von kleinen Werkstücken 11 auf große, d.h. die sichert eine Universalität der Vorrichtung. Das Problem derartiger Anpassung ist damit verbunden, daß auf die magnetisch gesättigte Platte 1 physikalische Beschränkungen bei der Befestigung der großen Werkstücke 11 auferlegt werden. Da der Fluß nach den Linien 22 (Fig. 8,9) in das Werkstück 11 aus der Platte 1 eindringt, so kann sich der die Platte 1 durchsetzende Fluß bei Vorhandensein eines sehr großen Werkstücks 11 als unzureichend für dessen Befestigung mit der erforderlichen Kraft erweisen. Der maximale Durchmesser des Werkstücks 11 muß also an die Dicke h der Platte 1 angepaßt sein. Ein die Lösung dieser Aufgabe veranschaulichendes Schema ist in Fig.9 aufgeführt. In der Platte 1 wird der Magnetfluß durch eine Induktion B charakterisiert, die der als bekannt geltenden Sättigungsinduktion des Werkstoffes der Platte 1 entspricht.

Der Vorgang der Befestigung des Werkstücks 11 wird durch eine Abzweigung des Magnetflusses in das Werkstück 11 in Richtung der Linie 22 bestimmt, wobei in die eine Hälfte der Auflagefläche des Werkstücks 11 (in Fig.9 schraffiert dasgestellt) der Fluß ein- und über die andere Hälfte austritt. Hierbei ist die magnetische Induktion $B_\delta$ eine mittlere Induktion im Spalt $\delta$ zwischen der Platte 1 und dem Werkstück 11, deren Größe durch die erforliche Anziehungskraft unter Berücksichtigung der bekannten Maxwellschen Formel

$$P_o = B_\delta^2 / 2\mu_o \qquad (3)$$

ermittelt werden kann, worin $\mu_o = 4 \cdot 10^{-7}$ die magnetische Feldkonstante ist.

Aus (3) folgt:

$$B_\delta = \sqrt{2\mu_o P_o} \qquad (4)$$

Zur Bestimmung des maximalen Durchmessers $D_{max}$ des Werkstücks 11, das auf der Platte 1 der Dicke h mit der erforderlichen Kraft befestigt werden soll, läßt sich ausgehend von den Angaben in Fig.9 eine folgende Gleichung verwenden:

$$B \cdot h \cdot D_{max} = \frac{\pi \cdot D_{max}^2}{8} \cdot B_\delta \qquad (5)$$

Hier stellt der linke Teil der Gleichung einen Magnetfluß, der durch das schraffierte Flächenstück der Platte 1 tritt, und der rechte Teil einen Fluß dar, der in eine Hälfte der Auflagefläche des Werkstücks 11 eintritt.

Aus (5) folgt:

$$D_{max} = \frac{8 \cdot B \cdot h}{\pi \sqrt{2\mu_o P_o}} \qquad (6)$$

Das größte unter der Wirkung der magnetischen Sättigung der Platte 1 noch zu befestigende Werkstück 11 weist einen Durchmesser von $\tau - b$ (Fig.1) auf. Die größeren Werkstücke 11 sollen durch die Einwirkung eines sie auf der kürzesten Wege über die Kerne 3 durchsetzenden Flusses befestigt werden.

Nach Einsetzen von $D_{max} = \tau - b$ in (6) erhalten wir für den Polabstand $\tau$ einen Ausdruck:

$$\tau = \frac{8 \cdot B \cdot h}{\pi \sqrt{2 \mu_O P_O}} + b \qquad (7)$$

Unter Benutzung der Zahlenwerte der bekannten Größen und unter Abrundung mit einer für ingenieurtechnische Berechnungen ausreichenden Genauigkeit bekommen wir:

$$\tau = \frac{1,6 \cdot 10^3 \cdot B \cdot h}{\sqrt{P_O}} + b, \qquad (8)$$

was mit dem Ausdruck (1) zusammenfällt.

Die Auswahl des Polabstandes gemäß Ausdruck (1) ermöglicht eine Befestigung sowohl von kleinen als auch von beliebigen großen Werkstücken 11, denn dieser Ausdruck ist unter den ungünstigsten Bedingungen erhalten worden. Bei der Herstellung der Vorrichtungen beispielsweise aus Stahl, für den in Fig.7 die Magnetisierungskurve 19 wiedergegeben ist, ergibt sich B = 1,9 T. Vorausgesetzt, daß als geometrische Abmessungen h = $20 \cdot 10^{-3}$ m, b = 3h = $60 \cdot 10^3$ m sind, erhalten wir für $P_O$ = 6 kp/cm$^2 \approx 6 \cdot 10^5$ N/m$^2$ einen folgenden Wert für den Polabstand $\tau$ :

$$\tau = \frac{1,6 \cdot 10^3 \cdot 1,9 \cdot 20 \cdot 10^{-3}}{\sqrt{6 \cdot 10^5}} + 60 \cdot 10^{-3} = 138,5 \mu N$$

Derartiger Abstand $\tau$ stellt einen für eine technische Realisierung sehr bequemen Wert dar, denn er ist verhältnismäßig groß, wodurch die Anzahl der Kerne 3 mit den Spulen 6 in der Vorrichtung und der Herstellungsaufwand für die letztgenannte reduziert werden können. Zur gleichen Zeit ist dieser Abstand nicht so groß, um ein zu starkes Magnetfeld über der Oberfläche der Platte 1 zu erzeugen, was wegen einer eventuellen Magnetisierung des Schneidwerkzeuges und eines Anklebens von Spänen bei der Bearbeitung des Werkstücks 11 unerwünscht ist. Trotz der Vereinfachung der Konstruktion ist also die Vorrichtung universeller als die bekannten Analogielösungen des gleichen Typs, weil sie in der Lage ist, sowohl große als auch kleine Werkstücke 11 zu befestigen.

Bei der Befestigung der kleinen Werkstücke 11 ist eine ausreichende Anziehungskraft im Bereich der oberen Teile 5 der Kerne 3 zu sichern. Zur Befestigung der Werkstücke 11 in einer in Fig.2,4 gezeigten Stellung ist es notwendig, daß der magnetische Widerstand des Eisenweges 12 für den Durchtritt des Magnetflusses durch das Werkstück 11 kleiner als der magnetische Widerstand des Eisenweges 13 des Magnetflusses in Richtung des unteren Teiles 4 des Kernes 3 ist. Dies wird erreicht, wenn die Kontaktfläche des unteren Teiles 4 des Kernes 3 die durch den Umfang der Stufe des Kernes 3 (Fig.6) begrenzte Querschnittsfläche der Platte 1 unterschreitet. In diesem Fall arbeitet der Übergangsbereich des Magnetflusses von der Platte 1 zum Teil 4 des Kernes 3 (Fig.2,4) in Richtung der Linie 13 bei ungefähr dergleichen Sättigung wie die Platte 1, weshalb sein magnetischer Widerstand groß ist und ein sich in Richtung der Linie 12 über das Werkstück 11 abzweigender und dieses befestigender Teil des Magnetflusses in Erscheinung tritt.

Im unteren Teil 4 des Kernes 3 soll der Fluß die Grundlage 2 ohne weiteres erreichen. Erweist sich die Verdikkung des unteren Teiles 4 des Kernes 3 um eine durch die Dicke des oberen Teiles 5 des Kernes 3 festgelegte Größe als unzureichend, ist der untere Teil 4 in der Weise auszuführen, daß er die Kontaktgegend der Platte 1 (Fig.10) überragt. Hierbei soll die Dicke des unteren Teiles 4 des Kernes 3 3 bis 4 Dicken der Platte 1 unter Beibehaltung der obengenannten Kontaktfläche mit der Platte 1 betragen. Zu diesem Zweck soll der untere Teil 4 des Kernes 3 verdickt werden, ohne daß ein Kontakt mit der Platte 1 hergestellt wird, d.h. es soll ein Luftspalt dazwischen bestehen, wie dies in Fig.10 gezeigt ist.

Der untere Teil 4 des Kernes 3 weist also an der Kontaktstelle mit der Platte 1 eine örtliche Einengung auf. Für sie wird entweder durch das Vorhandensein des obengenannten Spaltes (Fig.10) oder durch Anwendung von sich nach unten ausweitenden trapezförmigen oberen Teilen 5 (Fig.2) gesorgt.

Sämtliche Ausführungsformen der Konstruktion der Vorrichtung, in denen die unteren Teile 4 (Fig.3,4) der Kerne 3 als Ganzes mit der Platte 1 hergestellt sind, können in einem Gießverfahren gefertigt werden, bei dem die Platte 1, die unteren Teile 4 der Kerne 3 und die Gehäusewände 8 in Form eines Werkstücks hergestellt werden, das keiner Nachbearbeitung der Innengebiete bedarf. In diesen Ausführungsformen wird eine absolute Wasserdichtheit der Platte 1 erreicht, weil die Anordnung der oberen Teile 5 der Kerne 3 im Körper der Platte 1 mit Preßsitz (Fig.3) oder durch deren Loskeile (Fig.2) der Ganzheit des metallischen Überganges von der Platte 1 zu den unteren Teilen 4 der Kerne 3 nicht schadet.

Die Ausführung der durchgehenden Nut 14 im unteren Teil 4 (Fig.4) des Kernes 3 und die Anordnung eines Einsatzes in dieser gestattet es, die Kraft der Anziehung des Werkstücks 11 im Bereich des oberen Teiles 5 des Kernes 3 zu vergrößern.

Die Hauptvorteile der erfindungsgemäßen Vorrichtung zur magnetischen Befestigung von Werkstücken sind also Universalität, Einsatzzuverlässigkeit, Genauigkeit und Ermöglichung einer erheblichen Herstellungskostensenkung. Die Vorrichtung ist in der Lage, Werkstücke 11 mit einem Durchmesser bis zu 10 mm zu befestigen, die Platte 1 zur Aufnahme der Werkstücke 11 ist in der Vorrichtung entweder absolut wasserdicht oder sie besitzt eine erhöhte hermetische Abdichtung, die auf die Möglichkeit einer zusätzlichen Hermetisierung der horizontalen Kontaktflächen der Kerne 3 und der Platte 1 zurückzuführen ist. Nicht weniger als 90% der Fläche der Platte 1 zur Aufnahme der Werkstücke 11 stellen eine homogene metallische Oberfläche dar, was eine hohe Genauigkeit der Bestimmung und Bearbeitung der Werkstücke 11 auf dem größeren Teil der Oberfläche der Platte 1 prädestiniert. Die hohe Bearbeitungsgenauigkeit wird auch durch eine gleichmäßige Verteilung der Kraft der Anziehung des Werkstücks auf der größeren Teil der Oberfläche der Platte 1 erreicht.

Die besonderen Vorteile der Vorrichtung hängen mit der Möglichkeit ihres Einsatzes bei der Produktion von minderwertigen Konstruktionsstählen anstelle der hochwertigen magnetisch weichen Werkstoffe zusammen. Die detaillierten Berechnungen und die durchgeführten experimentellen Untersuchungen ergeben, daß bei Anziehungskräften von bis zu 5 kp/cm$^2$ für sämtliche Baugruppen der Vorrichtung mit Ausnahme der oberen Teile 5 der Kerne 3 und der Grundlage 2 selbst Eisenguß verwendet werden kann. Hierbei besteht dir Konstruktion der Vorrichtung lediglich aus vier Baugruppen: Platte 1, die als Ganzes mit den Kernen 3 gegossen ist, Spulen 6, obere Teile 5 der Kerne 3 und Grundlage 2. Derartige Ausführung der Vorrichtung sichert die Herstellungskostensenkung um ein Mehrfaches. Es ist wichtig zu betonen, daß die Anwendung der minderwertigen Stähle und selbst des Eisengusses keine Vergrößerung des Verbrauches von Wickelkupfer nach sich zieht. Die Anwendung der hochwertigen magnetischen Werkstoffe ist nur für kraftaufwendige Betriebsarten der Vorrichtungen, beispielsweise in Fräs- oder Hobelmaschinen notwendig, wo die Anziehungskräfte von ca. 8 kp/cm$^2$ und mehr erforderlich sind.

Industrielle Anwendbarkeit

Die vorgeschlagene Erfindung kann mit Erfolg für die Befestigung von Werkstücken aus ferromagnetischen Werkstoffen bei deren Bearbeitung auf Schleif-, Fräs- und anderen Maschinen eingesetzt werden. Es ist auch möglich, die vorgeschlagene Vorrichtung als Mitnehmer in Hebezeugen und Fördermitteln, Industriemanipulatoren und -robotern anzuwenden.

0209605

PATENTANSPRÜCHE

1. Vorrichtung zur magnetischen Befestigung von Werkstücken (11) bei deren Bearbeitung auf Werkzeugmaschinen, die eine Platte (1) zur Aufnahme der Werkstücke (11) und eine Einheit zur Magnetfelderregung in Form von mindestens einem auf einer Grundlage (2) angeordneten Kern (3) enthält, dessen unterer Teil (4) durch eine Spule (6) mit Gleichstromwicklung umschlossen und dessen oberer Teil (5) im Körper der Platte (1) untergebracht und von dieser mittels unmagnetischer Elemente (7) magnetisch isoliert ist, dadurch gekennzeichnet, daß der untere Teil (4) des Kernes (3) verdickt ausgeführt ist, wobei er mit dem oberen Teil (5) eine mit der Platte (1) kontaktierte Stufe bildet, während die Kontaktfläche der Platte (1) mit dem Kern (3) die Querschnittsfläche der Platte (1) nicht überschreitet, die durch den Umfang der Stufe des Kernes (3) begrenzt ist, und der Achsabstand ($\tau$) der Kerne (3) durch die Beziehung festlegt ist:

$$\tau = \frac{1,6 \cdot 10^3 \cdot B \cdot h}{\sqrt{P_0}} + b$$

Es bedeuten:

B - magnetische Induktion, die einer magnetischen Sättigung des Werkstoffes der Platte (1) entspricht;

h - Dicke der Platte (1);

$P_0$ - spezifische Kraft der Anziehung der Werkstücke (11);

b - Dicke der unteren Teile (4) der Kerne (3).

2. Vorrichtung nach Anspruch 1, dadurch gekennzeichnet, daß die oberen Teile (5) der Kerne (3) trapezförmig sind.

FIG.1

FIG.2

FIG.3

FIG.4

FIG.5

0209605

FIG. 6

$\mu = \mu(H)$

FIG. 7

FIG.8

FIG. 9

FIG.10

0209605

# INTERNATIONAL SEARCH REPORT

International Application No PCT/SU 86/00001

## I. CLASSIFICATION OF SUBJECT MATTER (if several classification symbols apply, indicate all)

According to International Patent Classification (IPC) or to both National Classification and IPC

IPC$^4$: B 23 Q 3/15, 3/152, 3/154

## II. FIELDS SEARCHED

| Minimum Documentation Searched [7] | |
|---|---|
| Classification System | Classification Symbols |
| IPC$^4$: | B 23 Q 3/15, 3/152, 3/154 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 593892, (Odesskoe spetsialnoe konstructorskoe bjuro spetsialnykh stankov), 01 February 1978, see the claims | 1,2 |
| A | FR, A, 1576725, (HEINRICH SPODIG), 01 August 1969, see the claims | 1 |
| A | O. Ya. Konstantinov "Raschet i konstruirovanie magnitnykh i elektromagnitnykh prisposoblenii", 1967, Mashinostroenie (Leningrad); see pages 52-53 | 1 |
| A | O.Ya. Konstantinov "Magnitnaya tekhnologicheskaya osnastka", 1974, Mashinostroenie (Leningrad), see pages 159,160 | 1 |

-.-.-.-.-.-.-

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 14 February 1986 (14.02.86) | 30 April 1986 (30.04.86) |
| International Searching Authority | Signature of Authorized Officer |
| ISA/SU | |

Form PCT/ISA/210 (second sheet) (January 1985)